# EUROPEAN PATENT SPECIFICATION

(11) **EP 0 454 823 B1**
(45) Date of publication and mention of the grant of the patent: **12.07.1995**
(21) Application number: 90917072.2
(22) Date of filing: 21.11.1990
(51) Int. Cl.: B29C 65/68, B29C 65/00

(54) **METHOD OF JOINING HOLLOW PLASTICS MEMBERS BY FUSION**
VERFAHREN ZUM VERBINDEN VON ROHRARTIGEN KUNSTSTOFFGEGENSTÄNDEN DURCH VERSCHMELZEN
PROCEDE D'ASSEMBLAGE D'ELEMENTS EN PLASTIQUE CREUX PAR FUSION

(30) Priority: 21.11.1989 GB 8926294
(43) Date of publication of application: 06.11.1991
(73) Proprietor: British Gas plc, London SW1V 3JL (GB)
(72) Inventor: STAFFORD, Trevor, George, Tyne & Wear NE26 3PQ (GB)
(74) Representative: Cummings, Robert James
(86) International application number: GB9001793
(87) International publication number: WO9107272

(56) References cited:
- WO-A-87/06182
- DE-B- 2 719 320
- FR-A- 1 374 690
- FR-A- 2 252 191
- Patent Abstracts of Japan, vol. 4, no. 76 (M-14)(558), 3 June 1980; & JP-A-5537312 (SHIYUUICHI SAKAI) 15 March 1980

## Description

The invention relates to methods of joining by fusion hollow members such as pipes or tubes, for example, made of synthetic plastics material.

Hollow members such as distribution pipes for natural gas, for example, made of polyethylene are joined by fusion by for example either of two well-established methods namely, butt fusion, socket fusion or electrofusion. In the former method the pipe ends are forced against a heated plate to fuse the ends. The plate is removed and the ends are forced together. That method requires the use of either automatically operable apparatus or very careful use of manually operable apparatus to ensure that successive joints made in the course of assembly of a pipeline run are of consistent and acceptable standard. The method involves upsetting the fused material which forms internal and external beads. The external bead (at least) may be removed by a subsequent cutting operation. The joint is fully fused across the entire interface between the butted end surfaces of the pipes.

In socket fusion the outer surfaces of the pipe ends and inner surfaces of the socket are melted using a heated tool and the pipe ends are fitted into the socket to create fusion joints.

In electrofusion, the pipe ends are fitted into a socket made of polyethylene and incorporating an electric heater element. Energisation of the element causes the inner layer of the socket and outer layers of the end portions of the pipes to fuse and join. There is not internal bead or upset but the socket remains as an external projection at the joint.

A variation of electrofusion has recently become available for joining relatively small diameter pipes, of some 63 millimetres in diameter, in which an internal tubular support is arranged inside the pipe ends, which are positioned within a heat-shrinkable coupler of conductive plymeric material. When current is passed through the coupler it becomes hot enough to melt the pipe ends and create a fusion joint between the pipe ends and between them and the coupler. European patent specification EP-A-0157640 refers to such subject-matter.

The object of the invention is to provide a method of joining hollow synthetic plastics members by fusion without using a socket or coupler joined to the outside surfaces of the pipes.

Where a pipeline made up of lengths of pipe joined together is required to be installed by insertion into a passage such as an existing main, for example, the presence of external couplers or sockets may be a drawback.

A method of joining hollow members of synthetic plastics material according to the invention comprises assembling the members with a liner of synthetic plastics material internally bridging mutually opposed end portions of the members, heating said end portions and said liner to expand the liner into contact with said end portions and to join the two members together by a welded joint formed between the end faces of the members or by welded joints formed between the members and the liner or by a combination of such joints, said heating of the liner causing it to reach its crystalline melting point without flowing and retaining sufficient elasticity and stiffness to recover the diameter which it had prior to a deformation, to reduce the diameter, carried out at lower temperature.

The heat is applied by an electrically energised heater assembly in contact with or at the outside surfaces of said end portions; or else the liner has an electrically energised resistive element.

Examples of how to perform the method and examples of hollow members joined by the method will now be described with reference to the accompanying drawings, in which;-

Figure 1 is a side-elevation partly in vertical section of parts of two hollow members of synthetic plastics material in the form of pipes assembled end to end with an internal liner;

Figures 2 and 3 are, respectively, elevations showing the same parts during joining using a heater assembly encircling the pipes and the finished joint after the heater has been removed; and

Figures 4 and 5 are views corresponding to Figures 1 and 3 but showing a second embodiment.

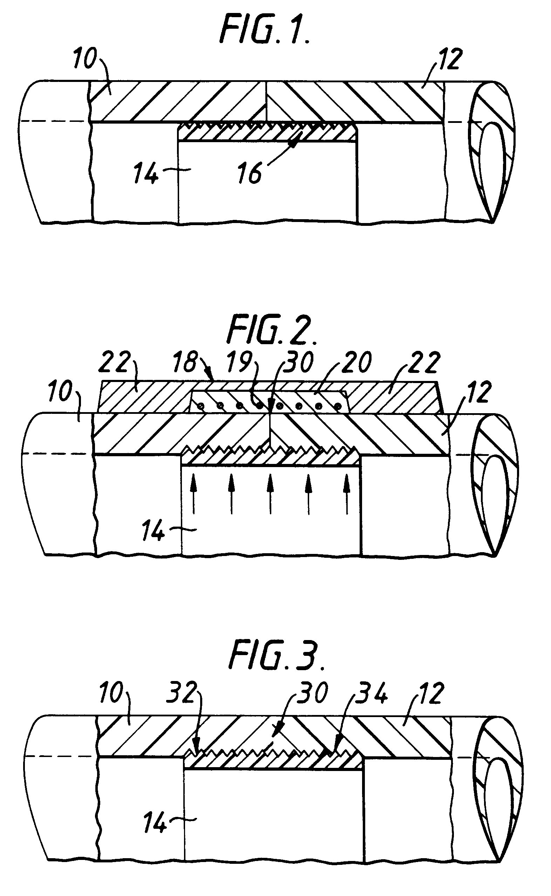

Figure 1 shows two pipes, 10, 12 for example natural gas distribution pipes of medium density polyethylene, assembled end to end with a hollow cylindrical liner 14 inside the pipes 10, 12 and bridging their ends. The liner is of synthetic plastics material, for example comprising or based on polyethylene. The material of the liner preferably has a melt flow index less than 0.3 when tested according to ISO Standard No.R292 at 190° Celsius under a force of 50 Newtons. That may be ensured by choice of the type of polyethylene or other polymer, for example, by choice of the molecular structure or by choice of the molecular weight. Alternatively, or in addition the material may incorporate filler material. A typical example of material for the liner 14 is polyethylene having a molecular weight above half a million and containing reinforcing filler material such as finely divided carbon. For example, the liner contains 20% by weight of high surface area carbon particles. The carbon acts as reinforcement and increases the stiffness of the liner, especially at temperatures at and approaching the fusion temperature. The liner 14 is heat-expansable and is preferably formed by extrusion initially and then cold drawn to reduce its diameter to allow the liner to fit relatively closely inside the pipes 10,12. The outside of the liner 14 preferably has serrations in the form of annular ribs 16, each rib being of triangular, transverse cross-section formed, for example, by machining.

The liner 14 preferably has a melting point of 140° Celsius at which temperature it fuses but remains mechanically stiff without exhibiting any tendency to flow and has sufficient stiffness to transmit and sustain appreciable mechanical loads as explained below.

After the pipes 10, 12 and the liner 14 have been assembled as shown in Figure 1 a removable heater assembly 18 is assembled around the pipes. Preferably, the assembly comprises an electrically energisable heater element 19 in a body 20 in two halves which are offered up to the pipes and complete a full encirclement of the pipes. The two halves are preferably held in position by two clamps 22 which are not directly heated and remain substantially cold. The heater assembly 18 preferably incorporates water cooling (not shown) which is used after the pipes have been joined to shorten the cooling time which must elapse before the heater assembly is removed.

When the heater element 19 is energised the liner 14 is heated to say 140° Celsius for example at which temperature it is preferred in this example that only an outer surface layer of the liner 14 was fused. However, in other examples the liner can be such that the heat applied, either at the same or some other temperature or by generation inside the pipes causes the full wall thickness of the liner to fuse. In any case the material of the liner is such that the liner remains relatively stiff and its stiffness is sufficient to enable the liner to sustain and transmit mechanical loads. Such loads are those which arise from the expansion of the liner 14 and the fact that the liner 14 has been subjected to cold drawing (or other cold working regime or other treatment) such as to create internal stress. Accordingly, on heating, the liner expands sufficiently to press against the insides of the end portions of the pipes 10, 12, notwithstanding the fact that those pipes also expand slightly because of their own increase in temperature. The expansion of the liner is indicated by arrows in Figure 2.

During the heating stage, which typically is maintained for 10 minutes, for example, it is preferred to restrain the pipes 10, 12 against relative endwise movement or to impose a positive endwise thrust upon the pipes. The heater assembly 18 provides support for the end portions of the pipes 10, 12 which end portions become substantially completely fused and softened and would otherwise become distorted by the pressure imposed on them by the expanding liner 14. The fusion of the pipes, 10, 12 begins at 120°C and is complete at 140°C.

During heating the expansion of the liner 14 causes a melt pressure and a flow of material which compresses the melt between the pipes 10, 12 and fills gaps between them and the liner 14. The pipe end surfaces fuse and merge across the interface in a manner analogous to butt fusion welding. The form of the serrations 16 is retained during heating and fusing with the result that some mechanical interlocking results between the liner 14 and the pipes 10, 12. The weld line between the parts may became wavy though that cannot be shown perfectly in the drawings.

Although it is not shown in the drawings, the liner 14 has a central, externally extending disc or spines or some other formation which is relatively thin but stiff enough to act as a location stop. The liner 14 is positioned in one pipe 10, say, with the disc or other formation abutting the end surface of the pipe then the second pipe 12 is passed over the liner 14 and advanced endwise until its end surface abuts the disc. The disc or other formation fuses into the weld zone between the end surfaces of the pipes. External marking of the pipes 10,12 enables the heater assembly to be accurately positioned.

After the whole assembly has cooled to some 120°C the heater assembly is released and removed from the pipes. As shown in Figure 3, the finished joint is free from external projections. The joint includes a welded joint between the two pipes 10, 12 at the interface 30 between their end surfaces and at the interfaces 32, 34 between the insides of the end portions of the pipes and the liner 14. The liner 14 internally reinforces the joint. Preferably, the wall thickness of liner 14, or the thickness protruding inwardly from the inside of the pipes after the liner has partially penetrated into the walls of the pipes, is no greater than the maximum distance to which an internal bead, produced by conventional butt fusion joining, would inwardly protrude. Accordingly, the pressure drop in gas flow in the pipes due to the presence of the liner 14 is acceptable.

The joint described above is particularly suitable for joining lengths of polyethylene pipe of the type specified for example as SDR 17 (Standard Dimension Ratio) which is stored in coiled form and which retains a curved form when uncoiled.

By way of example, the following dimensions illustrate a typical application of the invention to join polyethylene natural gas distribution pipes:

| | |
|---|---|
| Pipe outside diameter | 125 millimetres |
| Pipe wall thickness | 11 mm |
| Liner outside diameter | 102 mm |
| Liner wall thickness | 4 mm |
| Liner length | 40 mm |

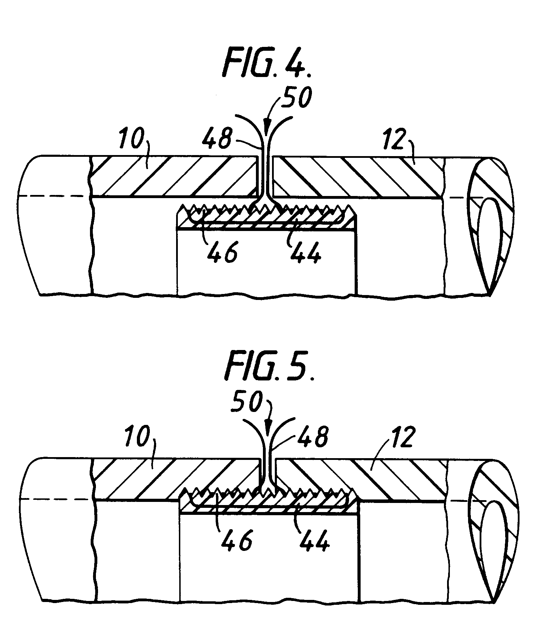

Figures 4 and 5 show a second embodiment. In this example the liner 44 is a cross-linked polyethylene tube of external diameter 100 millimetres and wall thickness 10 mm, so that the liner 44 is an easy clearance fit within the end portions of polyethylene pipes 10, 12 of external diameter 125 mm and wall thickness 11 mm.

The liner 44 was made by swaging down tube having an external diameter of 110 mm using a die and performing the swaging at a temperature of 21° Celsius.

The tube 44 was machined externally so that it had twin start (ie two) helical grooves 46 in its outer surface. A resistance wire 48 was wound as follows in the grooves 46. The winding began in the first groove at middle of the liner. The winding travelled to one end of the liner 44.

Then the wire was transferred to the second groove and travelled in that groove back to the other end of the liner 44. Finally the wire was transferred to the first groove and travelled back to the centre of the liner 44.

The pipes 10,12 were then fitted around the liner 44 with a gap 50 between the ends of the pipes and the two ends of the wire 48 were led away from the liner 44 through the gap 50.

Electric current having sufficient power to raise the temperature of the liner 44 to its crystalline melting point of 140°C was then passed through the wire 48. The liner expanded towards its pre-swaged outside diameter. This brought its outer surface into contact with the inner surface of the pipe. The temperature of the inner wall of the pipe then rose until at its melting point it flowed into the surface serration 46 of the liner, which continued to expand. On completion of the period of heating the liner was both physically keyed into the pipewall and fusion welded to it. Some contraction occurred on cooling but since cross-linked and non-cross-linked polyethylene have similar thermal expansion coefficients there was no tendency to separation of pipewall and liner. Because the pipe wall had not been melted through its complete thickness there was not a complete butt weld between the pipe end interfaces.

Cross-linked synthetic plastics such as polyethylene, for example, or filled high molecular weight polyethylene for example were chosen because they have the property of retaining stiffness and elasticity at the polymer crystalline melting point (Tm) of 140°C. In essence, such a material remains in the solid state although its crystalline structure has melted. Above Tm severe plastic deformations (even beyond the conventional yield point) which were imposed at lower temperatures can be recovered. Such high strains, having distorted and oriented the polymer chains in non-random configurations, are recovered above Tm by re-orientation and randomisation of the polymer configuration. In lower molecular weight materials such effects are hidden by the collapse into a liquid state at Tm.

The methods as described above join hollow members such as pipes or pipe fittings or pipe-like spigots of other hollow members without entailing the formation of any external projection such as upset material in the form of a bead or a projection formed by an external joining auxiliary such as a socket. Accordingly, pipes joined by the methods in that form at least are applicable to gas main reinstatement by insertion of the joined pipes into an existing main or other passage, for example using moling techniques.

The following are only some of the modifications of the methods within the scope of the appended claims:
a) The liner does not weld or welds only partially to the pipes, which weld to each other (Figure 1 to 3), or only the liner welds to the pipes.
b) The materials of the pipes differ from each other.
c) The liner is cold worked by cold rolling instead of by cold swaging.
d) The external serrations on the liner are formed by a spinning tool immediately following extrusion; or are formed as longitudinal serrations during extrusion.
e) The heat applied to the external surfaces of the pipes is supplied from an assembly or from an element which becomes embedded in or attached to the end portions of the pipe; for example, the element may be incorporated in a film of synthetic plastics material. The assembly or element, where desired, is such that it forms a relatively minor external projection on the joined pipes.
f) The heat is applied internally as well as externally so that the heating time is reduced. For example, the liner incorporates a member of magnetic material which is heated by electromagnetic induction; alternatively the liner incorporates material susceptible to heating by microwaves.
g) Heat is applied only internally for example as just mentioned above.
h) For some applications the serrations on the outside of the liner are dispensed with.

The effect of using the serrations, such as the serrations 16 for example, is to give an interlocking effect in the interface between the pipe end portions and the liner 14. Such an effect may be present even where the pipes do not become welded to the liner or become only partially welded to it.

Another effect is that the outward pressure exerted on the pipes by the expanding liner causes the serrations to penetrate the oxidised and degraded surface layer of the pipe in each case. Such a layer could otherwise prevent welding or reduce the strength of such weld as may be formed. The penetration effect of the serrations avoids the need for surface preparation of the insides of the pipes. The combination of the use of serrations and the outward pressure exerted by the expanding liner is thus a particular advantage.

Any bead, flash or other upset material at the joint whether internal or external is preferably removed.

The ends of the pipes may be prepared with end faces normal to the longitudinal axes of the pipes; or with chamfered ends which abut over only part of their areas; or with inclined abutting faces like a scarf joint.

## Claims

1. A method of joining hollow members (10, 12) of synthetic plastics material comprises assembling the members (10, 12) with a liner (14; 44) of synthetic plastics material internally bridging mutually opposed end portions of the members (10, 12), heating said end portions and said liner (14; 44) to expand the liner (14; 44) into contact with said end portions and to join the two members (10, 12) together by a welded joint formed between the end faces of the members (10, 12) or by welded joints formed between the members (10, 12) and the liner (14; 44) or by a combination of such joints, said heating of the liner (14; 44) causing it to reach its crystalline melting point without flowing and retaining sufficient elasticity and stiffness to recover the diameter which it had prior to a deformation, to reduce the diameter, carried out at lower temperature.

2. A method according to claim 1, the heat being applied by an electrically energised heater assembly (18) or element (44) in contact with or at the outside surfaces of said end portions.

3. A method according to claim 2, the assembly (18) or element (44) comprising clamp means (22) contacting said end portions.

4. A method according to claim 2, the heat being applied by heater assembly (18) or by an element (44) which becomes embedded in or attached to said end portions.

5. A method according to claim 1, the heat being applied at both external and internal surfaces of said end portions.

6. A method according to claim 1, the heat being applied only at internal surfaces of said end portions.

7. A method according to any preceding claim, the heat being applied by electromagnetic induction or by microwaves or by an electrically energised resistive element.

8. A method according to any preceding claim, the liner (14; 44) having serrations (16; 46) at its outer surface.

9. A method according to any preceding claim, the liner (14; 44) comprising polyethylene containing filler material.

10. A method according to claim 9, said filler material being carbon.

11. A method according to claim 1, the liner (14; 44) comprising a material having a molecular weight of more than half a million and containing finely divided carbon as filler material, the body being formed by extrusion and subsequently subjected to cold working to reduce the outside diameter of the body.

12. A method according to any one of claims 1 to 10, the liner (14; 44) being made by extrusion followed by cross-linking by radiation or by activation of chemical ingredients, after which the liner (14; 44) is subjected to cold working to reduce the outside diameter of the liner (14; 44).

## Patentansprüche

1. Verfahren zum Verbinden von hohlen Bauteilen (10, 12) aus synthetischem Plastikmaterial, mit den Verfahrensschritten, daß die Bauteile (10, 12) mit einer Auskleidung (14; 44) aus synthetischem Plastikmaterial zusammengesetzt werden, welche die einander gegenüberliegenden Endteilstücke der Bauteile (10, 12) überbrückt, daß diese Endteilstücke und die genannte Auskleidung (14; 44) erhitzt werden, um die Auskleidung (14; 44) in Kontakt mit den Endteilstücken auszudehnen und die beiden Bauteile (10, 12) durch eine geschweißte Verbindung miteinander zu verbinden, die zwischen den Endflächen der Bauteile (10, 12) gebildet wird, oder durch Schweißverbindungen, die zwischen den Bauteilen (10, 12) und der Auskleidung (14; 44) gebildet werden, oder durch eine Kombination solcher Verbindungen, wobei das Erhitzen der Auskleidung (14; 44) diese dazu bringt, ihren kristallinen Schmelzpunkt zu erreichen, und zwar ohne Fließen und bei Erhaltung einer ausreichenden Elastizität und Steifigkeit, um den Durchmesser wieder zu erreichen, den sie vor einer Deformation hatte, die zur Reduzierung des Durchmessers bei niedrigerer Temperatur ausgeführt wurde.

2. Verfahren nach Anspruch 1, bei dem die Wärme durch eine elektrisch erregbare Heizeinrichtung (18) oder ein Element (44) in Kontakt mit den Endteilstücken oder an den Außenoberflächen desselben aufgebracht wird.

3. Verfahren nach Anspruch 2, bei dem die Einrichtung (18) oder das Element (44) Klemmen (22) aufweist, die mit den Endteilstücken in Berührung stehen.

4. Verfahren nach Anspruch 2, bei dem die Wärme durch eine Heizeinrichtung (18) oder durch ein Element (44) aufgebracht wird, die bzw. das in die Endteilstücke eingebettet oder an diesen befestigt wird.

5. Verfahren nach Anspruch 1, bei dem die Wärme sowohl an den äußeren als auch an den inneren Oberflächen der Endteilstücke aufgebracht wird.

6. Verfahren nach Anspruch 1, bei dem die Wärme nur an inneren Oberflächen der Endteilstücke aufgebracht wird.

7. Verfahren nach einem der vorangehenden Ansprüche, bei dem die Wärme durch elektromagnetische Induktion oder durch Mikrowellen oder durch ein elektrisch beaufschlagtes Widerstandselement aufgebracht wird.

8. Verfahren nach einem der vorangehenden Ansprüche, bei dem die Auskleidung (14; 44) Verzahnungen (16; 46) an ihrer Außenoberfläche aufweist.

9. Verfahren nach einem der vorangehenden Ansprüche, bei dem Auskleidung (14; 44) aus Polyethylen besteht, das ein Füllermaterial enthält.

10. Verfahren nach Anspruch 9, bei dem das Füllermaterial Kohlenstoff ist.

11. Verfahren nach Anspruch 1, bei dem die Auskleidung (14; 44) aus einem Material besteht, das ein Molekulargewicht von mehr als einer halben Million hat und fein verteilten Kohlenstoff als Füllermaterial enthält, wobei der Körper durch Strangpressen geformt und nachfolgend einer Kaltbearbeitung unterzogen wird, um den Außendurchmesser des Körpers zu reduzieren.

12. Verfahren nach einem der Ansprüche 1 bis 10, bei dem die Auskleidung (14; 44) durch Strangpressen hergestellt wird, gefolgt von einer Quervernetzung durch Strahlung oder durch Aktivierung von chemischen Bestandteilen, wonach die Auskleidung (14; 44) einer Kaltbearbeitung unterworfen wird, um den Außendurchmesser der Auskleidung (14; 44) zu reduzieren.

## Revendications

1. Un procédé de jonction d'éléments creux (10, 12) en matière plastique synthétique comprend l'assemblage des éléments (10, 12) à l'aide d'une chemise (14 ; 44) en matière plastique synthétique qui passe intérieurement sur les parties d'extrémité mutuellement opposées des éléments (10, 12), le chauffage desdites parties d'extrémité et de ladite chemise (14 ; 44) afin de faire dilater la chemise (14 ; 44) pour la mettre en contact avec lesdites parties d'extrémité et réunir les deux éléments (10, 12) l'un à l'autre par un joint de soudure formé entre les surfaces d'extrémité des éléments (10, 12) ou par des joints de soudure formés entre les éléments (10, 12) et la chemise (14 ; 44) ou par une combinaison de ces joints, ledit chauffage de la chemise (14 ; 44) lui faisant atteindre son point de fusion cristallin sans écoulement et lui faisant conserver suffisamment d'élasticité et de rigidité pour qu'elle revienne au diamètre qu'elle avait avant une déformation exécutée à basse température pour en réduire le diamètre.

2. Procédé selon la revendication 1, la chaleur étant produite par un ensemble chauffant (18) alimenté en énergie électrique ou par un élément (44) en contact avec, ou situé sur, les surfaces extérieures desdites parties d'extrémité.

3. Procédé selon la revendication 2, l'ensemble (18) ou l'élément (44) comprenant des moyens de serrage (22) qui sont en contact avec lesdites parties d'extrémité.

4. Procédé selon la revendication 2, le chauffage étant produit par un ensemble chauffant (18) ou par un élément (44) qui devient enrobé dans lesdites, ou fixé auxdites, parties d'extrémité.

5. Procédé selon la revendication 1, la chaleur étant produite aussi bien sur les surfaces extérieures que sur les surfaces intérieures desdites parties d'extrémité.

6. Procédé selon la revendication 1, la chaleur étant produite uniquement sur les surfaces internes desdites parties d'extrémité.

7. Procédé selon l'une quelconque des revendications précédentes, la chaleur étant produite par induction électromagnétique ou par des micro-ondes ou par un élément résistant alimenté en énergie électrique.

8. Procédé selon l'une quelconque des revendications précédentes, la chemise (14 ; 44) ayant des dentelures (16 ; 46) sur sa surface extérieure.

9. Procédé selon l'une quelconque des revendications précédentes, la chemise (14 ; 44) consistant en du polyéthylène contenant une matière de charge.

10. Procédé selon la revendication 9, ladite matière de charge étant du carbone.

11. Procédé selon la revendication 1, la chemise (14 ; 44) étant en une matière ayant un poids moléculaire de plus d'un demi-million et contenant du carbone finement divisé qui constitue une matière de charge, le corps étant formé par extrusion et soumis ensuite à un travail à froid pour réduire le diamètre extérieur du corps.

12. Procédé selon l'une quelconque des revendications 1 à 10, la chemise (14 ; 44) étant réalisée par extrusion suivie de réticulation par radiation ou par activation d'ingrédients chimiques, après quoi la chemise (14 ; 44) est soumise à un travail à froid pour réduire le diamètre extérieur de la chemise (14 ; 44).
